(19) Europäisches Patentamt
European Patent Office
Office européen des brevets

(11) EP 4 450 555 A1

(12) EUROPEAN PATENT APPLICATION
published in accordance with Art. 153(4) EPC

(43) Date of publication:
23.10.2024 Bulletin 2024/43

(21) Application number: 22907384.6

(22) Date of filing: 09.12.2022

(51) International Patent Classification (IPC):
*C08L 23/14* (2006.01) *C08F 297/00* (2006.01)
*C08K 3/013* (2018.01) *C08K 3/34* (2006.01)
*C08L 23/08* (2006.01) *C08L 23/12* (2006.01)
*C08L 53/00* (2006.01)

(52) Cooperative Patent Classification (CPC):
**C08F 297/00; C08K 3/013; C08K 3/34; C08L 23/08; C08L 23/12; C08L 23/14; C08L 53/00**

(86) International application number:
**PCT/JP2022/045493**

(87) International publication number:
**WO 2023/112857 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.12.2021 JP 2021202931**

(71) Applicant: **Prime Polymer Co., Ltd.**
**Tokyo 104-0028 (JP)**

(72) Inventors:
- **FUKUDA ,Yusuke**
  **6161 RE Geleen (NL)**
- **TAKAHASHI, Shuichi**
  **Bang Sue, Bangkok 10800 (TH)**

(74) Representative: **J A Kemp LLP**
**80 Turnmill Street**
**London EC1M 5QU (GB)**

# (54) POLYPROPYLENE-BASED RESIN COMPOSITION AND USE THEREOF

(57) A polypropylene-based resin composition containing: 5 to 47 parts by mass of a propylene-based polymer (A) having an MFR of 50 to 150 g/10 min and an amount of a decane-soluble portion of 6 to 15% by mass, 20 to 30 parts by mass of a propylene homopolymer (B) having an MFR of 10 to 500 g/10 min, 23 to 30 parts by mass of an ethylene/α-olefin copolymer (C) being a random copolymer of ethylene and an α-olefin having 4 to 8 carbon atoms, and having a density of 0.850 to 0.880 $g/cm^3$, an MFR of 0.5 to 30 g/10 min, and a melting point peak of 110°C or more, and 30 to 40 parts by mass of an inorganic filler (D), provided that a total amount of the components (A) to (D) is 100 parts by mass.

EP 4 450 555 A1

## Description

Technical Field

The present invention relates to a polypropylene-based resin composition having a low coefficient of linear expansion and high dimensional stability, and capable of producing a molded body that is suitable for the production of a structure layered with other members, and use thereof.

Background Art

A molded body obtained by subjecting a polypropylene resin composition to injection molding has been more and more utilized in various fields such as automobile components and home appliance components, in terms of its excellent mechanical properties and moldability, and further, its cost performance that is relatively advantageous as compared with that of other materials.

In the automobile component field, polypropylene is used alone, and also used are a material in which impact resistance is improved by adding a rubber component such as an ethylene-propylene copolymer (EPR), an ethylene-butene copolymer (EBR), an ethylene-octene copolymer (EOR), a styrene-butadiene copolymer (SBR), or a polystyrene-ethylene/butene-polystyrene triblock copolymer (SEBS) to polypropylene; a material in which rigidity is improved by adding an inorganic filler such as talc, mica, or glass fiber; and a blend polymer in which a rubber component and an inorganic filler are added together and mechanical properties are imparted in a good balance.

In recent years, the development needs for a material having excellent dimensional stability (having a low linear expansion coefficient) while maintaining high mechanical properties (mainly, rigidity) are increasing to mainly use the material as a substitute for a metal material, and to achieve this, the material development research has been carried out. However, a polypropylene molded body typically has a large dimensional change (coefficient of linear expansion) due to the temperature, and thus, when the polypropylene molded body is applied to, for example, automobile outer panel applications under an environment where the difference in temperature is extreme, the polypropylene molded body have such problems that, for example, a gap is generated on a joint of components and assembly properties during assembling of components are deteriorated, that is, so-called gap quality defect problems. Thus, the benefit of high design properties and an excellent cost effect of the polypropylene molded body is still not sufficiently received in this field.

As the method for improving the dimensional stability of the polypropylene molded body, various propylene resin compositions obtained by blending, for example, an inorganic filler typified by talc, and an elastomer component with polypropylene have conventionally been suggested. Examples thereof include a method for producing a material having a low linear expansion that uses a propylene block copolymer containing crystalline polypropylene having a melt flow rate of 500 g/10 min or more in combination with a low molecular weight polyolefin (Patent Literature 1), a resin composition in which a specific ethylene/butene-1 copolymer is blended with a propylene block copolymer (Patent Literature 2), a resin composition in which the blending ratio and viscosity of the amorphous portion and crystal portion of a propylene block copolymer are specified (Patent Literature 3), a resin composition that uses talc having an average particle size of 3 $\mu$m or less and has an excellent coating appearance after injection molding (Patent Literature 4), a resin composition that contains a propylene-based resin produced using a Ziegler catalyst and talc having a specific shape (Patent Literature 5), and a resin composition that uses two kinds of propylene block copolymers each having a different melt flow rate and talc having a specific shape (Patent Literature 6). In addition, resin compositions containing a propylene-based block copolymer, a propylene homopolymer, an ethylene/$\alpha$-olefin copolymer, and an inorganic filler in a specific ratio are suggested as those that improve the surface impact resistance under low temperatures (Patent Literatures 7 and 8) .

In the automobile component field, use of resin as an outer panel material is positively promoted by manufacturers according to the needs of the reduction in weight of an automobile. In this trend, a back door outer is also increasingly switched from metal to resin. To use resin as the outer panel material, the dimension accuracy equivalent to metal is required from the viewpoint of design, and thus, a material having a low coefficient of linear expansion is required. In addition, since a back door material is required to be bonded with other members, high adhesion performance is also required.

However, the means for improving the adhesion performance in the case of bonding molded bodies of these polypropylene-based resin compositions and other members is not mentioned in the above-described literatures, and a molded body achieving both dimensional stability and high adhesion performance has not successfully obtained from conventional polypropylene-based resin compositions.

Citation List

Patent Literature

Patent Literature 1: JP2010-077396A
Patent Literature 2: JPH5(1993)-051498A
Patent Literature 3: JP2000-095919A
Patent Literature 4: JP2007-91789A
Patent Literature 5: JP2013-159709A
Patent Literature 6: JP2014-58614A
Patent Literature 7: JP2016-84386A
Patent Literature 8: WO2017/082358

Summary of Invention

Technical Problem

To achieve a polypropylene-based molded body having a low linear expansion, the amount of an auxiliary material having a low coefficient of linear expansion is required to be increased as described above. Further, to impart coating performance, the blending ratio of rubber is required to be increased. For these reasons, a polypropylene compounded material for a resin outer panel has a significantly high blending ratio of a filler and rubber, and when being bonded to other members, interface delamination likely occurs at the interface between the auxiliary material and the polypropylene compounded material during adhesiveness testing, so that the polypropylene compounded material has such a problem that the reduction in strength likely occurs. Moreover, since polypropylene itself has no polar functional group, flame treatment or plasma treatment is required to form a firm chemical bond with an adhesive, and there are such problems that the substrate surface is damaged by being subjected to the treatment and the reduction in adhesion strength likely occurs. Although a primer is typically used to ensure the adhesion strength, use of a primer causes an increase in costs and an increase in production processes. Accordingly, there is desired the development of a polypropylene-based molded body capable of producing a composite material having sufficient adhesion strength in a primerless manner while achieving two characteristics, high dimensional stability and high adhesion performance, and maintaining a low coefficient of linear expansion that is required for an outer panel material, and a polypropylene-based resin composition capable of producing the molded body.

An object of the present invention is to provide a polypropylene-based resin composition having a low coefficient of linear expansion, having excellent dimensional stability, and capable of producing a molded body having a high adhesion strength in a primerless manner, and use thereof.

Solution to Problem

As a result of diligent studies in view of the above situation, the present inventors have found that a polypropylene-based resin composition that contains an ethylene/α-olefin copolymer having a significantly high melting point as an elastomer component can produce a molded body having not only excellent dimensional stability but also excellent adhesiveness, and completed the present invention.

The present invention relates to the following items [1] to [8].

[1] A polypropylene-based resin composition comprising:

5 to 47 parts by mass of a propylene-based polymer (A) having a melt flow rate (230°C, 2.16 kg load) of 50 to 150 g/10 min and an amount of a decane-soluble portion of 6 to 15% by mass,
20 to 30 parts by mass of a propylene homopolymer (B) having a melt flow rate (230°C, 2.16 kg load) of 10 to 500 g/10 min,
23 to 30 parts by mass of an ethylene/α-olefin copolymer (C) being a random copolymer of ethylene and an α-olefin having 4 to 8 carbon atoms, and having a density of 0.850 to 0.880 g/cm$^3$, a melt flow rate (230°C, 2.16 kg load) of 0.5 to 30 g/10 min, and a melting point peak of 110°C or more, and
30 to 40 parts by mass of an inorganic filler (D), provided that a total amount of the components (A) to (D) is 100 parts by mass.

[2] The polypropylene-based resin composition according to [1], wherein the propylene-based polymer (A) is a block copolymer of propylene and ethylene, and an intrinsic viscosity [$\eta$] of a decane-soluble portion of the copolymer is 2 to 9 dl/g.
[3] The polypropylene-based resin composition according to [1] or [2], wherein the inorganic filler (D) is talc and has an aspect ratio of 3 or more and less than 15.
[4] The polypropylene-based resin composition according to any one of [1] to [3], wherein the polypropylene-based resin composition has a hot shear test strength at 90°C of more than 1.5 MPa in a primerless adhesion test.
[5] The polypropylene-based resin composition according to any one of [1] to [4], wherein the composition is used for an automobile exterior member.
[6] A molded body comprising the polypropylene-based resin composition according to any one of [1] to [5].
[7] The molded body according to [6], wherein the molded body is an injection molded body or a press molded body.
[8] The molded body according to [6] or [7], wherein the molded body is an automobile exterior member.

Advantageous Effects of Invention

According to the present invention, a polypropylene-based resin composition having a low coefficient of linear expansion, having excellent dimensional stability, and capable of producing a molded body that has a high adhesion strength with, for example, a urethane-based adhesive layer in a primerless manner, and use thereof can be provided.

Brief Description of Drawing

Figure 1 is a schematic diagram of the measurement of hot shear test strength.

Description of Embodiments

The present invention will be specifically described below.

Polypropylene-based resin composition

The polypropylene-based resin composition of the present invention contains a propylene-based polymer (A), a propylene homopolymer (B), an ethylene/$\alpha$-olefin copolymer (C), and an inorganic filler (D), and further contains other components as necessary.

<Propylene-based polymer (A)>

The propylene-based polymer (A) used in the present invention is a propylene-based polymer having a melt flow rate (230°C, 2.16 kg load) of 50 to 150 g/10 min and an amount of a decane-soluble portion of 6 to 15% by mass.
The propylene-based polymer (A) substantially contains 6 to 15% by mass of a decane-soluble portion (a1) and 85 to 94% by mass of a decane-insoluble portion (a2). The decane-insoluble portion (a2) typically refers to a component insoluble in an n-decane solvent at room temperature (23°C), and is usually equivalent to a propylene homopolymer portion (propylene homopolymer component) in the propylene-based polymer (A). The decane-soluble portion (a1) is equivalent to the portion other than the propylene homopolymer portion, and is preferably a copolymer portion of propylene and ethylene (ethylene/propylene copolymer component).
The propylene-based polymer (A) usually contains 6 to 15% by mass of the decane-soluble portion (a1) and 85 to 94% by mass of the decane-insoluble portion (a2), and preferably contains 7 to 12% by mass of the decane-soluble portion (a1) and 88 to 93% by mass of the decane-insoluble portion (a2), wherein the sum of the content of (a1) and the content of (a2) is 100% by mass.
The propylene-based polymer (A) is preferably a propylene-based block copolymer obtained from propylene and ethylene. The intrinsic viscosity [$\eta$] of the decane-soluble portion (a1) of the propylene-based block copolymer is preferably 2 to 9 dl/g, and more preferably 3 to 8 dl/g.
The melt flow rate (230°C, 2.16 kg load) of the propylene-based polymer (A) is 50 to 150 g/10 min, preferably 50 to 130 g/10 min, more preferably 60 to 120 g/10 min, and particularly preferably 70 to 110 g/10 min.
The propylene-based polymer (A) can be produced by a known method. For example, a propylene-based block copolymer can be obtained by polymerizing propylene using a catalyst for olefin polymerization containing a solid titanium catalyst component (I) and an organometallic compound catalyst component (II) described below, and further copolymerizing propylene and ethylene.

[Solid titanium catalyst component (I)]

The solid titanium catalyst component (I) constituting the catalyst for olefin polymerization contains, for example, titanium, magnesium, halogen, and as necessary, an electron donor. Known components can be used for the solid titanium catalyst component (I) without limitation.

In the preparation of the solid titanium catalyst component (I), a magnesium compound and a titanium compound are used in many cases.

Specific examples of the magnesium compound include magnesium halides such as magnesium chloride and magnesium bromide; alkoxymagnesium halides such as methoxymagnesium chloride, ethoxymagnesium chloride, and phenoxymagnesium chloride; alkoxymagnesium such as ethoxymagnesium, isopropoxymagnesium, butoxymagnesium, and 2-ethylhexoxymagnesium; aryloxymagnesium such as phenoxymagnesium; and carboxylic acid salts of magnesium, such as magnesium stearate. One of magnesium compounds may be used singly, or two or more may be used in combination. Moreover, such a magnesium compound may be a complex compound with another metal, a composite compound, or a mixture with another metal compound.

Among them, a magnesium compound containing halogen is preferable, and magnesium halide, in particular, magnesium chloride is more preferable. Further, alkoxymagnesium such as ethoxymagnesium is also preferable. The magnesium compound may be a compound that is derived from another substance, such as a compound obtained by bringing an organomagnesium compound such as a Grignard reagent into contact with, for example, titanium halide, silicon halide, or alcohol halide.

Examples of the titanium compound include a tetravalent titanium compound represented by the following formula.

$$Ti(OR)_gX_{4-g}$$

wherein R is a hydrocarbon group, X is a halogen atom, and g satisfies $0 \leq g \leq 4$.

Specific examples of the titanium compound include titanium tetrahalides such as $TiCl_4$ and $TiBr_4$; alkoxytitanium trihalides such as $Ti(OCH_3)Cl_3$, $Ti(OC_2H_5)Cl_3$, $Ti(O\text{-}n\text{-}C_4H_9)Cl_3$, $Ti(OC_2H_5)Br_3$, and $Ti(O\text{-}i\text{-}C_4H_9)Br_3$; alkoxytitanium dihalides such as $Ti(OCH_3)_2Cl_2$ and $Ti(OC_2H_5)_2Cl_2$; alkoxytitanium monohalides such as $Ti(OCH_3)_3Cl$, $Ti(O\text{-}n\text{-}C_4H_9)_3Cl$, and $Ti(OC_2H_5)_3Br$; and tetraalkoxytitanium such as $Ti(OCH_3)_4$, $Ti(OC_2H_5)_4$, $Ti(OC_4H_9)_4$, and $Ti(O\text{-}2\text{-}ethylhexyl)_4$. One of titanium compounds may be used singly, or two or more may be used in combination. Among them, titanium tetrahalide is preferable, and titanium tetrachloride is more preferable.

For example, compounds described in detail in JPS57(1982)-63310A and JPH5(1993)-170843A can also be used as the magnesium compound and the titanium compound.

Specific examples of a preferred method for preparing the solid titanium catalyst component (I) used in the present invention include the following methods (P-1) to (P-4).

(P-1) Method involving bringing a solid adduct composed of a magnesium compound and an electron donor component (1) such as alcohol, an electron donor component (2) described below, and a liquid titanium compound into contact with each other in a suspended state in the presence of an inert hydrocarbon solvent.

(P-2) Method involving bringing a solid adduct composed of a magnesium compound and an electron donor component (1), an electron donor component (2), and a liquid titanium compound into contact with each other in divided portions.

(P-3) Method involving bringing a solid adduct composed of a magnesium compound and an electron donor component (1), an electron donor component (2), and a liquid titanium compound into contact with each other in a suspended state and in divided portions in the presence of an inert hydrocarbon solvent.

(P-4) Method involving bringing a liquid magnesium compound composed of a magnesium compound and an electron donor component (1), a liquid titanium compound, and an electron donor component (2) into contact with each other.

The reaction temperature in preparing the solid titanium catalyst component (I) is preferably -30 to 150°C, more preferably -25 to 130°C, and particularly preferably -25 to 120°C.

The preparation of the solid titanium catalyst component (I) can be carried out also in the presence of a known medium as necessary. Specific examples of the medium include slightly polar aromatic hydrocarbons such as toluene and known aliphatic hydrocarbons and alicyclic hydrocarbons such as heptane, octane, decane, and cyclohexane. Among them, aliphatic hydrocarbons are preferable.

The electron donor component (1) used to form the solid adduct and the liquid magnesium compound is preferably a known compound capable of solubilizing the magnesium compound in a temperature range of about room temperature to 300°C, and, for example, alcohols, aldehydes, amines, carboxylic acids, and mixtures thereof are preferable. Examples of these compounds include compounds described in JPS57(1982)-63310A and JPH5(1993)-170843A.

Specific examples of the alcohol capable of solubilizing the magnesium compound include aliphatic alcohols such as methanol, ethanol, propanol, butanol, isobutanol, ethylene glycol, 2-methylpentanol, 2-ethylbutanol, n-heptanol,

n-octanol, 2-ethylhexanol, decanol, and dodecanol; alicyclic alcohols such as cyclohexanol and methylcyclohexanol; aromatic alcohols such as benzylalcohol and methylbenzylalcohol; and aliphatic alcohols having an alkoxy group, such as n-butylcellosolve.

Specific examples of carboxylic acids include organic carboxylic acids having 7 or more carbon atoms, such as caprylic acid and 2-ethylhexanoic acid. Specific examples of aldehydes include aldehydes having 7 or more carbon atoms, such as capric aldehyde and 2-ethylhexyl aldehyde. Specific examples of amines include amines having 6 or more carbon atoms, such as heptylamine, octylamine, nonylamine, laurylamine, and 2-ethylhexylamine.

Preferable examples of the electron donor component (1) include the above alcohols, and ethanol, propanol, butanol, isobutanol, hexanol, 2-ethylhexanol, and decanol are particularly preferable.

While the compositional ratio of magnesium to the electron donor component (1) in the resulting solid adduct and the liquid magnesium compound cannot be generally specified because the ratio varies according to the kind of compound used, the electron donor component (1) per mole of magnesium in the magnesium compound is preferably 2 mol or more, more preferably 2.3 mol or more, and particularly preferably 2.7 mol or more, and 5 mol or less.

Particularly preferable examples of the electron donor used in the solid titanium catalyst component (I) as necessary include compounds having two or more ether bonds via an aromatic carboxylic acid ester and/or a plurality of carbon atoms (hereinafter referred to as the "electron donor component (2)") .

Known aromatic carboxylic acid esters and polyether compounds that are preferably used in conventional catalysts for olefin polymerization, such as compounds described in JPH5(1993)-170843A and JP2001-354714A, can be used without limitations as the electron donor component (2).

Specific examples of the aromatic carboxylic acid esters include aromatic carboxylic acid monoesters such as benzoic acid esters and toluic acid esters, and aromatic polycarboxylic acid esters such as phthalic acid esters. Among them, aromatic polycarboxylic acid esters are preferable, and phthalic acid esters are more preferable. The phthalic acid esters are preferably alkyl phthalates such as ethyl phthalate, n-butyl phthalate, isobutyl phthalate, hexyl phthalate, and heptyl phthalate, and diisobutyl phthalate is particularly preferable.

Specific examples of the polyether compounds include compounds represented by the following chemical formula (1):

[Chem. 1]

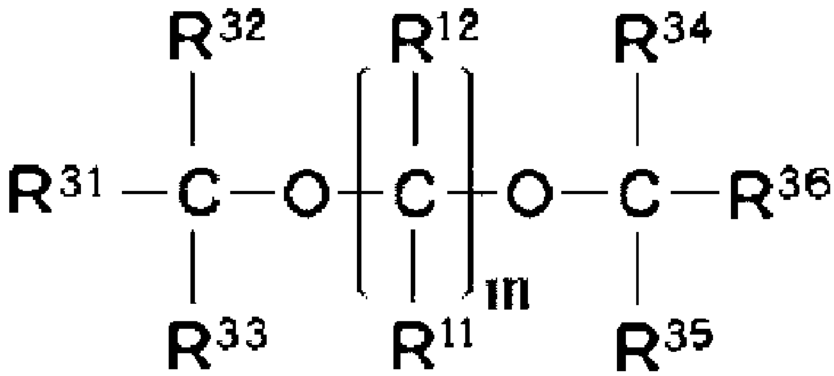

··· (1)

wherein m is an integer of 1≤m≤10 and more preferably an integer of 3≤m≤10; and $R^{11}$ to $R^{36}$ are each independently a hydrogen atom or a substituent having at least one element selected from carbon, hydrogen, oxygen, fluorine, chlorine, bromine, iodine, nitrogen, sulfur, phosphorus, boron, and silicon. When m is 2 or more, a plurality of $R^{11}$ and $R^{12}$ may be the same or different. Any $R^{11}$ to $R^{36}$, and preferably $R^{11}$ and $R^{12}$, may together form a ring other than a benzene ring.

Specific examples of such compounds include monosubstituted dialkoxypropanes such as 2-isopropyl-1,3-dimethoxypropane, 2-s-butyl-1,3-dimethoxypropane, and 2-cumyl-1,3-dimethoxypropane; disubstituted dialkoxypropanes such as 2-isopropyl-2-isobutyl-1,3-dimethoxypropane, 2,2-dicyclohexyl-1,3-dimethoxypropane, 2-methyl-2-isopropyl-1,3-dimethoxypropane, 2-methyl-2-cyclohexyl-1,3-dimethoxypropane, 2-methyl-2-isobutyl-1,3-dimethoxypropane, 2,2-diisobutyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2,2-di-s-butyl-1,3-dimethoxypropane, 2,2-dineopentyl-1,3-dimethoxypropane, 2-isopropyl-2-isopentyl-1,3-dimethoxypropane, and 2-cyclohexyl-2-cyclohexylmethyl-1,3-dimethoxypropane; dialkoxyalkanes such as 2,3-dicyclohexyl-1,4-diethoxybutane, 2,3-dicyclohexyl-1,4-diethoxybutane, 2,3-diisopropyl-1,4-diethoxybutane, 2,4-diphenyl-1,5-dimethoxypentane, 2,5-diphenyl-1,5-dimethoxyhexane, 2,4-diisopropyl-1,5-dimethoxypentane, 2,4-diisobutyl-1,5-dimethoxypentane, and 2,4-diisoamyl-1,5-dimethoxypentane; and trialkoxyalkanes such as 2-methyl-2-methoxymethyl-1,3-dimethoxypropane, 2-cyclohexyl-2-ethoxymethyl-1,3-diethoxypropane,

and 2-cyclohexyl-2-methoxymethyl-1,3-dimethoxypropane. One of polyether compounds may be used singly, or two or more may be used in combination. Among them, 1,3-diethers are preferable, and 2-isopropyl-2-isobutyl-1,3-dimethoxypropane, 2,2-diisobutyl-1,3-dimethoxypropane, 2-isopropyl-2-isopentyl-1,3-dimethoxypropane, 2,2-dicyclohexyl-1,3-dimethoxypropane, and 2,2-bis(cyclohexylmethyl) 1,3-dimethoxypropane are particularly preferable.

In the solid titanium catalyst component (I), halogen/titanium (an atomic ratio) (i.e., the number of moles of halogen atoms/the number of moles of titanium atoms) is 2 to 100, and preferably 4 to 90, the electron donor component (1)/titanium atoms (a molar ratio) is 0 to 100, and preferably 0 to 10, the electron donor component (2)/titanium atoms (a molar ratio) is 0 to 100, and preferably 0 to 10. Magnesium/titanium (an atomic ratio) (i.e., the number of moles of magnesium atoms/the number of moles of titanium atoms) is 2 to 100, and preferably 4 to 50.

For example, the conditions described in, for example, EP585869A1 or JPH5(1993)-170843A can be suitably used as the more specific preparation conditions of the solid titanium catalyst component (I), except for using the electron donor component (2).

[Organometallic compound catalyst component (II)]

The organometallic compound catalyst component (II) is a component containing a metal element selected from Group 1, Group 2, and Group 13 of the periodic table. For example, a compound containing a Group 13 metal (such as an organoaluminum compound), an alkyl complex compound of a Group 1 metal and aluminum, or an organometallic compound of a Group 2 metal can be used. Among them, an organoaluminum compound is preferable.

Specific suitable examples of the organometallic compound catalyst component (II) include organometallic compound catalyst components described in known documents such as the aforementioned EP585869A1.

In addition to the electron donor component (1) and the electron donor component (2) described above, a known electron donor component (3) may be used in combination, as long as the object of the present invention is not impaired.

The electron donor component (3) is preferably an organosilicon compound. The organosilicon compound is, for example, a compound represented by the following formula.

$$R_nSi(OR')_{4-n}$$

wherein R and R' are hydrocarbon groups, and n is an integer satisfying $0<n<4$.

Specifically, as the organosilicon compound represented by the above formula, for example, diisopropyldimethoxysilane, t-butylmethyldimethoxysilane, t-butylmethyldiethoxysilane, t-amylmethyldiethoxysilane, dicyclohexyldimethoxysilane, cyclohexylmethyldimethoxysilane, cyclohexylmethyldiethoxysilane, vinyltrimethoxysilane, vinyltriethoxysilane, t-butyltriethoxysilane, phenyltriethoxysilane, diphenyldimethoxysilane, cyclohexyltrimethoxysilane, cyclopentyltrimethoxysilane, 2-methylcyclopentyltrimethoxysilane, cyclopentyltriethoxysilane, dicyclopentyldimethoxysilane, dicyclopentyldiethoxysilane, tricyclopentylmethoxysilane, dicyclopentylmethylmethoxysilane, dicyclopentylethylmethoxysilane, or cyclopentyldimethylethoxysilane is used. Among them, vinyl triethoxysilane, diphenyldimethoxysilane, dicyclohexyldimethoxysilane, cyclohexylmethyldimethoxysilane, or dicyclopentyldimethoxysilane is preferable.

Also, silane compounds represented by the following formula as described in WO2004/016662 are preferable examples of the organosilicon compound:

$$Si(OR^a)_3(NR^bR^c)$$

wherein $R^a$ is a hydrocarbon group having 1 to 6 carbon atoms. For example, $R^a$ is an unsaturated or saturated aliphatic hydrocarbon group having 1 to 6 carbon atoms, and in particular, a hydrocarbon group having 2 to 6 carbon atoms is preferable. Specific examples include a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, and a cyclohexyl group. Among them, an ethyl group is particularly preferable.

$R^b$ is a hydrocarbon group having 1 to 12 carbon atoms or hydrogen. For example, $R^b$ is an unsaturated or saturated aliphatic hydrocarbon group having 1 to 12 carbon atoms or hydrogen. Specific examples include a hydrogen atom, a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, a cyclohexyl group, and an octyl group. Among them, an ethyl group is particularly preferable.

$R^c$ is a hydrocarbon group having 1 to 12 carbon atoms. For example, $R^c$ is an unsaturated or saturated aliphatic hydrocarbon group having 1 to 12 carbon atoms. Specific examples include a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, a cyclohexyl group, and an octyl group. Among them, an ethyl group is particularly preferable.

Specific examples of the organosilicon compound represented by the above formula include dimethylaminotriethoxysilane, diethylaminotriethoxysilane, diethylaminotrimethoxysilane, diethylaminotri-n-propoxysilane, di-n-propylaminotriethoxysilane, methyl-n-propylaminotriethoxysilane, t-butylaminotriethoxysilane, ethyl-n-propylaminotriethoxysilane, ethyl-iso-propylaminotriethoxysilane, and methylethylaminotriethoxysilane.
Further, other examples of the organosilicon compound also include compounds represented by the following formula.

$$RNSi(OR^a)_3$$

In the above formula, RN is a cyclic amino group. Specific examples include a perhydroquinolino group, a perhydroisoquinolino group, a 1,2,3,4-tetrahydroquinolino group, a 1,2,3,4-tetrahydroisoquinolino group, and an octamethyleneimino group. $R^a$ is the same as above.
Specific examples of the organosilicon compound represented by the above formula include (perhydroquinolino)triethoxysilane, (perhydroisoquinolino)triethoxysilane, (1,2,3,4-tetrahydroquinolino)triethoxysilane, (1,2,3,4-tetrahydroisoquinolino)triethoxysilane, and octamethyleneiminotriethoxysilane.
Two or more of the organosilicon compounds described above may be used in combination.

[Polymerization]

A propylene/ethylene block copolymer which is a preferred aspect of the propylene-based polymer (A) can be produced by methods such as polymerizing propylene in the presence of the above-described catalyst for olefin polymerization and then copolymerizing propylene and ethylene, or polymerizing propylene in the presence of a prepolymerization catalyst obtained by prepolymerization and then copolymerizing propylene and ethylene.
Prepolymerization is carried out by prepolymerizing an olefin usually in an amount of 0.1 to 1000 g, preferably 0.3 to 500 g, and particularly preferably 1 to 200 g per gram of the catalyst for olefin polymerization. In prepolymerization, the catalyst can be used in a concentration higher than the catalyst concentration in the system of polymerization.
The concentration of the solid titanium catalyst component (I) in prepolymerization, in terms of titanium atom, is usually 0.001 to 200 mmol, preferably 0.01 to 50 mmol, and more preferably 0.1 to 20 mmol per liter of a liquid medium.
The amount of the organometallic compound catalyst component (II) in prepolymerization may be an amount such that usually 0.1 to 1000 g and preferably 0.3 to 500 g of a polymer is produced per gram of the solid titanium catalyst component (I), and the amount is usually 0.1 to 300 mol, preferably 0.5 to 100 mol, and more preferably 1 to 50 mol per mole of titanium atoms in the solid titanium catalyst component (I).
In prepolymerization, the electron donor components can also be used as necessary, and, at this time, such components are usually 0.1 to 50 mol, preferably 0.5 to 30 mol, and more preferably 1 to 10 mol per mole of titanium atoms in the solid titanium catalyst component (I).
Prepolymerization can be carried out under mild conditions after adding an olefin and the above catalyst components to an inert hydrocarbon medium. In the case of using an inert hydrocarbon medium, prepolymerization is preferably carried out in a batch-wise manner.
Specific examples of the inert hydrocarbon medium include aliphatic hydrocarbons such as propane, butane, pentane, hexane, heptane, octane, decane, dodecane, and kerosene; alicyclic hydrocarbons such as cyclopentane, methylcyclopentane, cyclohexane, cycloheptane, methylcycloheptane, and cyclooctane; aromatic hydrocarbons such as benzene, toluene, and xylene; halogenated hydrocarbons such as ethylene chloride and chlorobenzene; and mixtures thereof. Among them, aliphatic hydrocarbons are preferable.
Prepolymerization can also be carried out by using an olefin itself as the solvent. In addition, prepolymerization can also be performed in a state substantially free from a solvent. In this case, prepolymerization is preferably carried out in a continuous manner.
The olefin used in prepolymerization may be the same as or different from the olefin used in polymerization that will be described below. As the olefin, in particular, propylene is preferable.
The temperature upon prepolymerization is usually -20 to 100°C, preferably -20 to 80°C, and more preferably 0 to 40°C.
Next, polymerization will now be described that is performed by way of the above-described prepolymerization or without prepolymerization.
Polymerization can be divided into a step of producing a propylene homopolymer component and a step of producing a propylene-ethylene copolymer component.
Polymerization (and prepolymerization) can be conducted by any of the liquid-phase polymerization methods such as bulk polymerization, solution polymerization, and suspension polymerization, and the gas-phase polymerization methods. The step of producing the propylene homopolymer component is preferably a liquid-phase polymerization method such as bulk polymerization or suspension polymerization, or a gas-phase polymerization method. The step of

producing the propylene-ethylene copolymer component is preferably a liquid-phase polymerization method such as bulk polymerization or suspension polymerization, or a gas-phase polymerization method, and more preferably a gas-phase polymerization method.

When polymerization takes the reaction form of slurry polymerization, an inert hydrocarbon as used during the above-described prepolymerization can be used as a reaction solvent, and an olefin that is liquid at the reaction temperature and pressure, can also be used.

In polymerization, the solid titanium catalyst component (I) is used in an amount, in terms of titanium atom, of usually 0.0001 to 0.5 mmol and preferably 0.005 to 0.1 mmol per liter of the polymerization volume. The organometallic compound catalyst component (II) is used in an amount of usually 1 to 2000 mol, and preferably 5 to 500 mol per mole of titanium atoms in the prepolymerization catalyst component in the polymerization system. When the electron donor component is used, it is used in an amount of usually 0.001 to 50 mol, preferably 0.01 to 30 mol, and more preferably 0.05 to 20 mol, per mole of the organometallic compound catalyst component (II).

The polymerization in the presence of hydrogen makes it possible to regulate (reduce) the molecular weight of the resulting polymer, and provides a polymer having a high melt flow rate (MFR). The amount of hydrogen required to regulate the molecular weight may be appropriately regulated because it varies according to the kind of production process to be used, the polymerization temperature, and the pressure.

In the step of producing the propylene homopolymer component, the MFR can be regulated by regulating the polymerization temperature and the amount of hydrogen. Also, in the step of producing the propylene-ethylene copolymer component, the intrinsic viscosity can be regulated by regulating the polymerization temperature, the pressure, and the amount of hydrogen.

In polymerization, the olefin polymerization temperature is usually 0 to 200°C, preferably 30 to 100°C, and more preferably 50 to 90°C. The pressure (gauge pressure) is usually ordinary pressure to 100 kgf/cm$^2$ (9.8 MPa), and preferably 2 to 50 kgf/cm$^2$ (0.20 to 4.9 MPa).

In the production of the propylene/ethylene block copolymer which is a preferred aspect of the propylene-based polymer (A), polymerization can be carried out by any of batch, semicontinuous, and continuous methods. Further, as for the reactor shape, any of tubular and tank reactors can be used. Further, polymerization can be carried out at two or more divided stages by changing the reaction conditions. In this case, a tubular reactor and a tank reactor can be combined.

To obtain the propylene/ethylene copolymer portion in the propylene/ethylene block copolymer which is a preferred aspect of the propylene-based polymer (A), the ethylene/(ethylene + propylene) gas ratio is controlled in the polymerization step 2 described below. The ethylene/(ethylene + propylene) gas ratio is usually 5 to 80 mol%, preferably 10 to 70 mol%, and more preferably 15 to 60 mol%.

As described above, the decane-insoluble portion (a2) of the propylene/ethylene block copolymer is mainly constituted of the propylene homopolymer component. On the other hand, the decane-soluble portion (a1) is mainly constituted of the ethylene/propylene copolymer component which is a rubber component. For example, by continuously conducting the following two polymerization steps 1 and 2, the propylene/ethylene block copolymer which is a preferred aspect of the propylene-based polymer (A) can be obtained.

(Polymerization step 1)

A step of polymerizing propylene in the presence of a solid titanium catalyst component to produce a propylene homopolymer component (propylene homopolymer production step).

(Polymerization step 2)

A step of copolymerizing propylene and ethylene in the presence of a solid titanium catalyst component to produce an ethylene/propylene copolymer component (copolymer rubber production step).

In particular, it is more preferable that the polymerization step 1 be carried out at a former stage and the polymerization step 2 be carried out at a latter stage. Each of the polymerization steps 1 and 2 can be carried out by using two or more polymerization tanks. The content of the decane-soluble portion (a1) can be regulated by the polymerization time (retention time) of the polymerization step 1 and the polymerization step 2. The polymerization step 1 at the former stage may be carried out using polymerizers arranged in series over two stages or more. In this case, the ratio of propylene to hydrogen in each stage may be different in each polymerizer.

The propylene-based polymer (A) used in the present invention may contain one or more biomass-derived monomers. Monomers of the same kind that constitute the polymer may be only a biomass-derived monomer, or may contain both a biomass-derived monomer and a fossil fuel derived monomer. The biomass-derived monomer is a monomer obtained by using any renewable natural raw materials, for example, derived from plants or animals including fungi, yeast, algae, and bacteria, and residues thereof as the raw material. It contains $^{14}C$ isotopes in a proportion of

about $10^{-12}$ as carbon, and has a biomass carbon concentration (pMC) measured according to ASTM D 6866 of about 100 (pMC). The biomass-derived monomer can be obtained by conventionally known methods. The propylene-based polymer (A) used in the present invention preferably contains the biomass-derived monomer, in view of reducing the environmental load. As long as the polymer production conditions such as the catalyst for polymerization and the polymerization temperature are equivalent, even when the raw material olefin contains a biomass-derived olefin, the molecular structure except that $^{14}C$ isotopes are contained in a proportion of about $10^{-12}$ is equivalent to that of a propylene-based polymer composed of a fossil fuel-derived monomer. Thus, the performance is considered to be not different from each other.

The propylene-based polymer (A) according to the present invention may contain chemical recycle-derived propylene. The propylene constituting the polymer may be only chemical recycle-derived propylene, or may contain chemical recycle-derived propylene and fossil fuel-derived propylene and/or biomass-derived propylene. The chemical recycle-derived propylene is obtained by conventionally known methods. The propylene-based polymer (A) according to the present invention preferably contains chemical recycle-derived propylene, in view of reducing the environmental load (mainly, lowering wastes). Even when the raw material monomer contains a chemical recycle-derived monomer, the chemical recycle-derived monomer, which is a monomer obtained by turning a polymer such as waste plastic to a monomer unit such as propylene by, for example, depolymerization or thermal decomposition and produced using the monomer as the raw material, has a molecular structure equivalent to that of a propylene homopolymer composed of a fossil fuel-derived monomer, as long as the polymer production conditions such as the catalyst for polymerization, the polymerization process, and the polymerization temperature are equivalent. Thus, the performance is considered to be not different from each other.

<Propylene homopolymer (B)>

The propylene homopolymer (B) used in the present invention is a propylene homopolymer having a melt flow rate (230°C, 2.16 kg load) of 10 to 500 g/10 min.

The propylene homopolymer (B) may be a polymer obtained by polymerizing substantially only propylene. For example, a homopolymer obtained by polymerizing only propylene, or a crystalline polymer obtained by copolymerizing propylene and 6 mol% or less, and preferably 3 mol% or less of another $\alpha$-olefin can be used. Among them, a homopolymer obtained by polymerizing only propylene is preferable.

The propylene homopolymer (B) can be produced by polymerizing monomers mainly containing propylene by a known method. For example, the propylene homopolymer (B) can be obtained by polymerizing monomers mainly containing propylene in the presence of the above-described catalyst for olefin polymerization containing the solid titanium catalyst component (I) and the organometallic compound catalyst component (II), or a combined catalyst of titanium trichloride and an alkylaluminum compound, which is usually referred to as a Ziegler-Natta catalyst. The polymerization reaction may be carried out in a continuous manner or in a batch-wise manner. Moreover, the propylene homopolymer (B) can be suitably produced by, for example, carrying out only the above-described polymerization step 1.

In the polymerization reaction, the polymerization temperature is usually 0 to 200°C, preferably 30 to 100°C, and more preferably 50 to 90°C. The pressure (gauge pressure) is usually ordinary pressure to 100 $kgf/cm^2$ (9.8 MPa), and preferably 2 to 50 $kgf/cm^2$ (0.20 to 4.9 MPa).

The melt flow rate (230°C, 2.16 kg load) of the propylene homopolymer (B) is 10 to 500 g/10 min, preferably 10 to 300 g/10 min, and more preferably 20 to 250 g/10 min.

The propylene homopolymer (B) may be a single polymer or may be a combination of two or more propylene homopolymers within a range satisfying the above melt flow rate as a whole.

The propylene homopolymer (B) used in the present invention may contain biomass-derived propylene. Propylene that constitutes the polymer may be only biomass-derived propylene, or may contain both biomass-derived propylene and fossil fuel-derived propylene. The biomass-derived propylene is a monomer obtained by using any renewable natural raw materials, for example, derived from plants or animals including fungi, yeast, algae, and bacteria, and residues thereof as the raw material. It contains $^{14}C$ isotopes in a proportion of about $10^{-12}$ as carbon, and has a biomass carbon concentration (pMC) measured according to ASTM D 6866 of about 100 (pMC). The biomass-derived propylene can be obtained by conventionally known methods. The propylene homopolymer (B) used in the present invention preferably contains the biomass-derived monomer, in view of reducing the environmental load. As long as the polymer production conditions such as the catalyst for polymerization and the polymerization temperature are equivalent, even when the raw material propylene contains biomass-derived propylene, the molecular structure except that $^{14}C$ isotopes are contained in a proportion of about $10^{-12}$ is equivalent to that of a propylene homopolymer composed of fossil fuel-derived propylene. Thus, the performance is considered to be not different from each other.

The propylene homopolymer (B) used in the present invention may contain chemical recycle-derived propylene as the monomer, as in the above-described propylene-based polymer (A). That is, the propylene constituting the polymer may be only chemical recycle-derived propylene, or may contain chemical recycle-derived propylene and fossil fuel-derived propylene and/or biomass-derived propylene.

<Ethylene/α-olefin copolymer (C)>

The ethylene/α-olefin copolymer (C) used in the present invention is a random copolymer of ethylene and an α-olefin having 4 to 8 carbon atoms, and is an ethylene/α-olefin copolymer having a density of 0.850 to 0.880 g/cm$^3$, a melt flow rate (230°C, 2.16 kg load) of 0.5 to 30 g/10 min, and a melting point peak of 110°C or more. The ethylene/α-olefin copolymer (C) is expected to contribute to the improvement in the dimensional stability (the reduction in the coefficient of linear expansion) of the molded body obtained from the resin composition by a synergistic effect with other components, and also contributes to the improvement in other physical properties, resulting in an expression of a high physical-property balance in the molded body.

The α-olefin having 4 to 8 carbon atoms that constitutes the ethylene/α-olefin copolymer (C) is preferably 1-butene, 1-hexene, or 1-octene. One of α-olefins may be used singly, or two or more may be used in combination. The ethylene/α-olefin copolymer (C) is particularly preferably an ethylene-octene copolymer or an ethylene-butene copolymer.

The melt flow rate (230°C, 2.16 kg load) of the ethylene/α-olefin copolymer (C) is 0.5 to 30 g/10 min, preferably 1 to 25 g/10 min, and more preferably 2 to 20 g/10 min.

When the melt flow rate (230°C, 2.16 kg load) of the ethylene/α-olefin copolymer (C) is 0.5 g/10 min or more, the reduction in the flowability of the polypropylene-based resin composition and the poor dispersion during kneading tend to hardly occur, and the reduction in physical properties such as impact resistance and the deterioration of the surface appearance of the molded body tend to be hardly caused. In addition, when the melt flow rate (230°C, 2.16 kg load) is 30 g/10 min or less, the molded body obtained from the resin composition tends to have sufficient impact resistance.

The density of the ethylene/α-olefin copolymer (C) is 0.850 to 0.880 g/cm$^3$, and preferably 0.855 to 0.875 g/cm$^3$.

The melting point peak of the ethylene/α-olefin copolymer (C) is 110°C or more, and preferably 110 to 130°C. The melting point peak refers to a value determined by a differential scanning calorimeter (DSC). Specifically, the temperature at the maximum peak position when an endothermic curve is determined by a differential scanning calorimeter (DSC) can be determined as the melting point peak (Tm). When the melting point peak of the ethylene/α-olefin copolymer (C) satisfies the above high temperature range, the molded body composed of the polypropylene-based resin composition containing the ethylene/α-olefin copolymer (C) has excellent adhesion strength with, for example, a curable resin layer formed of a urethane-based adhesive.

<Inorganic filler (D)>

As the inorganic filler (D) used in the present invention, a known inorganic filler can be used, and examples include, but are not particularly limited to, talc, calcium carbonate, natural mica, synthetic mica, wollastonite, and montmorillonite. The inorganic filler (D) may be used singly, or two or more may be used in combination. Among them, talc is preferable. When the polypropylene-based resin composition of the present invention contains the inorganic filler (D), the mechanical properties of the molded body obtained from the resin composition are excellent.

The inorganic filler (D) is not particularly limited as long as it can be dispersed in the resin composition, and the average particle size thereof is, for example, 1 μm to 20 pm, and preferably more than 3.0 μm and 10.0 μm or less, preferably 3.0 μm to 8.0 μm, and more preferably 3.0 μm to 7.0 μm. The average particle size is a value measured by a laser diffraction method. Specifically, the average particle size is a particle size at an integrated value of 50% in the particle size distribution determined with a particle size distribution meter such as a laser diffraction and scattering particle size distribution meter. Examples of the measuring apparatus include MT3300EXII manufactured by Microtrac and LA-920 manufactured by Horiba, Ltd.

The aspect ratio of the inorganic filler (D) is not particularly limited, but is usually 3 or more and less than 15, preferably 4 to 13, and more preferably 5 to 11. Typically, the aspect ratio refers to a value representing the ratio of the major axis to the thickness of the filler, or a value representing the ratio of the long side to the short side. When the aspect ratio is 3 or more, the rigidity and the dimensional stability of the molded body tend to be hardly reduced. When the aspect ratio is less than 15, the balance of the mechanical properties tends to be hardly reduced, and further, the impact strength also tends to be hardly reduced. Specifically, the aspect ratio is a value determined as follows: powders are photographed using an electron microscope, the major axis and the thickness of the powders are measured, the average values thereof are determined, thereby determining the ratio of the average particle size/the average thickness.

The inorganic filler (D) contributes to the improvement in the dimensional stability (the reduction in the coefficient of linear expansion) of the molded body obtained from the resin composition, and also contributes to the improvement of the mechanical properties such as rigidity and impact strength. It is suitable that the inorganic filler (D) has the above-described average particle size (and aspect ratio) because particularly excellent dimensional stability is obtained and a high physical-property balance excellent in rigidity and impact strength is easily expressed by a synergistic effect with other components.

As the inorganic filler (D), inorganic fillers in any form, such as granules, plates, rods, fiber, and whisker can

be used. In addition, inorganic fillers commercially available as the filler for polymer can also be used. Further, not only typical inorganic fillers in the form of powder or roving, but also those in the form of, for example, chopped strand, compressed bulk, pellet (granulation), and granulate, having increased convenience of handling can be used. Among them, powder, compressed bulk, and granulate are preferable.

The inorganic filler (D) may be a mixture of two or more inorganic fillers.

The method for producing the inorganic filler (D) is not particularly limited, and can be produced by various known methods. For example, when talc is used as the inorganic filler (D), talc having a specific average particle size and aspect ratio can be produced by pulverization or granulation. Specific examples include a method of pulverizing talc raw stones with an impact pulverizer or a micron mill pulverizer, and a method of further pulverizing the pulverized talc with a jet mill and classifying and regulating the pulverized talc with, for example, a cyclone or a micron separator. The aspect ratio and average particle size of talc can be appropriately regulated by the pulverizing apparatus and pulverizing time, and talc having a controlled shape can be obtained by performing classification as necessary.

As the inorganic filler (D), those obtained by pulverizing raw stones may be directly used, or those in which at least part is subjected to surface treatment may be used. As for the surface treatment, for example, various surface treatment agents such as an organic titanate-based coupling agent, an organic silane coupling agent, a modified polyolefin obtained by grafting an unsaturated carboxylic acid or an anhydride thereof, fatty acid, fatty acid metal salt, and fatty acid ester can be used. One of the surface treatment agents may be used singly, or two or more may be used in combination.

Into the polypropylene-based resin composition according to the present invention, as necessary, other additives such as a nucleating agent, a heat-resistant stabilizer, an antistatic agent, a weathering stabilizer, a light-resistant stabilizer, an anti-aging agent, an antioxidant, a fatty acid metal salt, a softener, a dispersant, a filler, a colorant, a lubricant, and a pigment can be blended as long as the object of the present invention is not impaired. The additives may be mixed in any order; the additives may be mixed simultaneously, or a multi-stage mixing method in which some components are mixed and then the other components are mixed may be used.

<Polypropylene-based resin composition>

The polypropylene-based resin composition according to the present invention contains 5 to 47 parts by mass of the propylene-based polymer (A), 20 to 30 parts by mass of the propylene homopolymer (B), 23 to 30 parts by mass of the ethylene/$\alpha$-olefin copolymer (C), and 30 to 40 parts by mass of the inorganic filler (D), provided that the total amount of the components (A) to (D) is 100 parts by mass.

The polypropylene-based resin composition according to the present invention preferably contains 7 to 35 parts by mass of the propylene-based polymer (A), 20 to 30 parts by mass of the propylene homopolymer (B), 23 to 28 parts by mass of the ethylene/$\alpha$-olefin copolymer (C), and 32 to 40 parts by mass of the inorganic filler (D), provided that the total amount of the components (A) to (D) is 100 parts by mass.

The polypropylene-based resin composition according to the present invention more preferably contains 8 to 28 parts by mass of the propylene-based polymer (A), 23 to 30 parts by mass of the propylene homopolymer (B), 24 to 28 parts by mass of the ethylene/$\alpha$-olefin copolymer (C), and 33 to 38 parts by mass of the inorganic filler (D), provided that the total amount of the components (A) to (D) is 100 parts by mass.

The polypropylene-based resin composition according to the present invention particularly preferably contains 10 to 22 parts by mass of the propylene-based polymer (A), 25 to 30 parts by mass of the propylene homopolymer (B), 24 to 27 parts by mass of the ethylene/$\alpha$-olefin copolymer (C), and 34 to 37 parts by mass of the inorganic filler (D), provided that the total amount of the components (A) to (D) is 100 parts by mass.

The polypropylene-based resin composition according to the present invention can be produced by blending the components (A) to (D) mentioned above and, as necessary, optional components such as additives. Each component may be sequentially blended in any order or may be mixed simultaneously. Moreover, a multi-stage mixing method in which some components are mixed and then the other components are mixed may be employed. Specifically, the polypropylene-based resin composition according to the present invention can be produced by, for example, blending the components (A) to (C) which are the resin components (organic compound components) in the polypropylene-based resin composition first, and then adding the component (D) and, as necessary, adding optional components such as additives.

Examples of the method for blending each component include a method for simultaneously or sequentially mixing or melt-kneading each component using a mixing apparatus such as a Banbury mixer, a single-screw extruder, a twin-screw extruder, or high-speed twin-screw extruder.

The melt flow rate (230°C, 2.16 kg load) of the polypropylene-based resin composition of the present invention is usually 23 g/10 min or more, preferably more than 23 g/10 min, and 50 g/10 min or less. When the melt flow rate is set to such a range, the moldability is good, and the deterioration of the coating appearance after injection molding can be suppressed.

The polypropylene-based resin composition of the present invention can be suitably used in various fields such as automobile interior or exterior members (in particular, automobile exterior members) and home appliance components.

Molded body composed of polypropylene-based resin composition

The molded body composed of the polypropylene-based resin composition of the present invention is a molded body obtained from the polypropylene-based resin composition of the present invention mentioned above. Such a molded body of the present invention can be obtained by appropriately molding the polypropylene-based resin composition of the present invention. The molding method of the polypropylene-based resin composition is not particularly limited, and various known methods can be used as the molding method of the resin composition. As the molding method of the molded body of the present invention, in particular, injection molding or press molding is preferable.

The molded body of the present invention has a low coefficient of linear expansion, has a small dimensional change due to a temperature change, has excellent dimensional stability, and also has excellent adhesiveness to a curable resin. The molded body of the present invention has excellent adhesiveness to a curable resin having a urethane bond, and exhibits a high adhesion strength even when no primer is interposed (primerless) between the molded body and a curable resin layer particularly formed of a urethane-based adhesive.

Specifically, when the molded body surface is subjected to surface treatment as necessary and a curable resin layer is formed by curing a urethane-based adhesive that contains a urethane prepolymer having a polyether skeleton and an aliphatic isocyanate derivative without using a primer, the molded body exhibits such an excellent adhesion strength that the hot shear test strength at 90°C (tensile speed: 50 mm/minute) measured in a primerless adhesion test according to JIS K6850:1999 is usually 1.2 MPa or more, preferably more than 1.5 MPa, more preferably more than 2.0 MPa, and further preferably 2.5 MPa or more.

The molded body of the present invention can be suitably utilized as an automobile interior material such as a door trim, an instrument panel, a ceiling, a console box, a pillar, and a glove box; an automobile exterior member such as a bumper, a side guard, an air spoiler, a side protector, a fender, a door panel, and a back door; a home appliance component; or an industrial component such as a building material. In addition, the molded body of the present invention has excellent adhesiveness to a curable resin having a urethane bond, and can thus be suitably used for an application as a raw material of a composite member with other members, such as a multilayer body with a curable resin having a urethane bond and a multilayer body layered with other members via a urethane-based adhesive, and for example, particularly suitably used for an automobile exterior member application such as a back door.

Examples

Hereinafter the present invention will be described in detail with reference to Examples, but the present invention is not limited to these Examples.

The measurement and evaluation of each physical property were carried out by the following methods.

[Melt flow rate (MFR) (g/10 min)]

MFR was measured under conditions of a test load of 2.16 kg and a test temperature of 230°C according to ISO 1133.

[Amount of decane-soluble portion ($D_{sol}$) and amount of decane-insoluble portion ($D_{insol}$)]

About 3 g of a sample [component (A)] (it was measured to a unit of $10^{-4}$ g, and this mass was denoted as $x_2$ (g) in the following equation), 500 ml of n-decane, and a small amount of a heat-resistant stabilizer soluble in n-decane were loaded in a glass measurement vessel, and the sample was dissolved by being heated to 150°C over 2 hours while being stirred with a stirrer in a nitrogen atmosphere, then held at 150°C for 2 hours, and gradually cooled to 23°C over 8 hours. The resulting liquid containing precipitates was subjected to filtration under reduced pressure through a 25G-4 standard glass filter manufactured by Iwata Glass Industrial Co., Ltd. Then, 100 ml of the filtrate was harvested and dried under reduced pressure to give a part of a decane-soluble component, and the mass thereof was weighed to a unit of $10^{-4}$ g (this mass was denoted as $x_1$ (g) in the following equation). Using this measured value, the amount of the decane-soluble portion ($D_{sol}$) and the amount of the decane-insoluble portion ($D_{insol}$) at room temperature (i.e., 23°C) were determined by the following equation.

$$D_{sol}\ (\%\ \text{by mass}) = 100 \times (500 \times x_1)/(100 \times x_2)$$

$$D_{insol}\ (\%\ \text{by mass}) = 100 - D_{sol}$$

[Melting point peak]

An endothermic curve is determined by a differential scanning calorimeter (DSC), and then the temperature at the maximum peak position is determined as the melting point peak (Tm) .

As for the measuring machine, Pyris 1 manufactured by PerkinElmer was used. The sample was placed in an aluminum pan, and the temperature was held at 30°C for 1 minute, then increased to 160°C at 500°C/min, thereafter held at 160°C for 5 minutes, decreased to -30°C at 10°C/min, and then the melting point peak (Tm) was determined from the endothermic curve obtained when the temperature was increased at 10°C/min from -30°C to 160°C.

[Average particle size of inorganic filler]

A particle size value at a cumulative amount of 50% by mass read from a particle size cumulative curve measured by a laser diffraction method according to JIS R1620 and JIS R1622 was set to the average particle size.

[Aspect ratio of inorganic filler]

Powders were photographed using an electron microscope, the major axis and the thickness of the powders were measured, the average values thereof were determined, and the aspect ratio was determined from the ratio of the average particle size/the average thickness.

[Flexural modulus (MPa)]

The flexural modulus was measured under the following conditions according to ASTM D790.

Temperature: 23°C
Test piece: 127 mm (length) × 12.7 mm (width) × 6.35 mm (thickness)
Bending speed: 30 mm/min
Span distance: 100 cm

[Izod impact strength (J/m)]

The Izod impact strength was measured under the following conditions according to ASTM D256.

Test piece: 63.5 mm (length) × 12.7 mm (width) × 3.2 mm (thickness) with a notch
Test temperature: -30°C

[Coefficient of linear expansion ($10^{-5}$/°C)]

The coefficient of linear expansion was evaluated by the TMA method (measurement range: -30 to 80°C) according to ASTM D 696.

[Primerless adhesion test (hot shear test at 90°C)]

Urethane-based adhesive

In the primerless adhesion test, an adhesive obtained by mixing a main agent component and a curing agent component prepared as described below immediately before adhesion was used as a urethane-based adhesive.

(Preparation of main agent component)

42.4 parts by mass of a urethane prepolymer, 1.7 parts by mass of an isocyanurate of hexamethylene diisocyanate (Takenate D-170HN, manufactured by Mitsui Chemicals, Inc.), 1.3 parts by mass of a mixture of an isocyanurate and an allophanate of pentamethylene diisocyanate (STABiO D-376N, manufactured by Mitsui Chemicals, Inc.), 20.6 parts by mass of carbon black (#200MP, manufactured by Shin Nikka Carbon Co., Ltd.), 18.3 parts by mass of calcium carbonate (SUPER S, manufactured by MARUO CALCIUM CO., LTD.), 15.5 parts by mass of a plasticizer (diisononyl phthalate, manufactured by J-PLUS Co., Ltd.), and 0.2 parts by mass of a catalyst (dimorpholino diethyl ether, manufactured by San-Apro Ltd.) were mixed while stirring using a stirrer to obtain the main agent component of the adhesive.

The urethane prepolymer was synthesized by mixing 700 g of polyoxypropylenediol (average molecular weight:

2000), 300 g of polyoxypropylenetriol (average molecular weight: 3000), and 499 g of 4,4'-diisocyanatephenylmethane (molecular weight: 250) (at this time, NCO/OH = 2.0), further adding 500 g of diisononyl phthalate, and stirring in a nitrogen stream at 80°C for 12 hours, thereby allowing them to react with each other. The urethane prepolymer contained 2.10% of the isocyanate group.

(Preparation of curing agent component)

45.9 parts by mass of trifunctional polypropylene polyol (EXCENOL 1030, manufactured by AGC. Inc), 5.0 parts by mass of polybutadienediol (Poly bd R-45HT, manufactured by Idemitsu Kosan Co., Ltd., hydroxyl value: 0.8 mol/kg), 2.0 parts by mass of terpineol (manufactured by YASUHARA CHEMICAL CO., LTD.), 45.8 parts by mass of calcium carbonate (KALFAIN200, manufactured by MARUO CALCIUM CO., LTD.), 1.0 part by mass of ion-exchange water, and 0.1 parts by mass of a catalyst (dimorpholino diethyl ether, manufactured by San-Apro Ltd.) were mixed while stirring using a stirrer to obtain the curing agent component of the adhesive.

Preparation of test piece and surface treatment thereof

Each polypropylene-based resin composition was subjected to injection molding using a mold cavity having a length of 350 mm, a width of 100 mm, and a thickness of 3 mm at a resin temperature of 210°C and a mold temperature of 40°C, and the obtained flat plates were cut out into a shape of 100 mm × 25 mm × 3 mm to obtain test pieces for the primerless adhesion test.

The surface of the resulting test piece was subjected to surface treatment (flame treatment). As for the surface treatment, a flame treatment apparatus (FTS 201 manufactured by Arcogas) was used. In the flame treatment apparatus, the flow rate of the combustion gas and the air can be regulated.

As for the surface treatment, a surface having a surface free energy of 42 dyne/cm (mN/m) (surface treated state: low treatment) was fabricated by fixing the flow rate of the air to 100 L/min, regulating the flow rate of the combustion gas (propane gas) to 3.7 L/min, and setting the distance between the flat plate and a flame irradiation head to 40 mm and the treatment speed to 800 mm/sec. Also, a surface having a surface free energy of 52 dyne/cm (mN/m) (surface treated state: middle treatment) was fabricated by setting the distance to 30 mm and the treatment speed to 800 mm/sec, and further, a surface having a surface free energy of 64 dyne/cm (mN/m) (surface treated state: high treatment) was fabricated by setting the distance to 10 mm and the treatment speed to 800 mm/sec, in the same manner.

Production of layered structure test piece by primerless adhesion, hot shear test at 90°C

An adhesive layer composed of the adhesive was formed on each test piece subjected to surface treatment obtained above in a primerless manner so as to have an adhesion area of 25 mm (width) × 10 mm (length) and a thickness of 5 mm, glass (7.5 × 25 × 5 mm in thickness) was selected and used as an opposite member through the adhesive layer, and this was cured under room temperature conditions to obtain layered structure test pieces in which a molded body composed of the polypropylene-based resin composition, a resin cured layer obtained from the adhesive, and glass are layered. After each obtained layered structure test piece was cured at room temperature for 3 days, the rear surface thereof at the resin substrate side was subjected to the same surface treatment as above, and a cation electrodeposition steel plate having a thickness of 1 mm was bonded thereto using an adhesive (WS-242 manufactured by Sika Hamatite), which was further cured at room temperature for 3 days. Then, glass was fixed using a tensile testing machine according to JIS K6850:1999 as illustrated in the schematic diagram of Figure 1, the shear strength was measured under conditions of 90°C and a tensile rate of 50 mm/min, and the average value of four measured values was determined as the hot shear test strength (MPa).

[Production Example 1] Preparation of propylene/ethylene block copolymer (A-1)

(1) Preparation of solid titanium catalyst component

95.2 g of anhydrous magnesium chloride, 442 mL of decane, and 390.6 g of 2-ethylhexylalcohols were allowed to thermally react at 130°C for 2 hours to obtain a uniform solution. 21.3 g of phthalic anhydride was added into this solution, and the mixture was further mixed while stirring at 130°C for 1 hour to dissolve phthalic anhydride.

After this uniform solution was cooled to room temperature, 75 mL of the uniform solution was added dropwise into 200 mL of titanium tetrachloride held at -20°C over 1 hour. After the addition was finished, the temperature of this mixed solution was increased to 110°C over 4 hours. When the temperature reached 110°C, 5.22 g of diisobutyl phthalate (DIBP) was added, and the mixture was held at the same temperature for 2 hours while stirring.

After the reaction for 2 hours was finished, the solid portion was harvested by hot filtration, resuspended in 275

ml of titanium tetrachloride, and again heated at 110°C for 2 hours. After the reaction was finished, the solid portion was harvested again by hot filtration and thoroughly washed with decane at 110°C and hexane until no free titanium compound was detected in the solution.

The detection of this free titanium compound was confirmed by the following method. 10 mL of the supernatant of the above solid catalyst component was harvested with a syringe and added to 100 mL of a branched Schlenk substituted with nitrogen in advance. Then, the solvent hexane was dried with nitrogen gas flow, and further vacuum dried for 30 minutes. To this, 40 mL of ion-exchange water and 10 mL of (1+1) sulfuric acid were added and stirred for 30 minutes. This aqueous solution was transferred through a filter to a 100 mL volumetric flask. Subsequently, 1 mL of a concentrated $H_3PO_4$ solution as the masking agent of iron (II) ions and 5 mL of a 3% aqueous hydrogen peroxide solution as the coloring reagent of titanium were added, and the volumetric flask was further filled up to 100 mL with ion-exchange water and shaken for mixing. After 20 minutes, the absorbance at 420 nm was observed using UV, and free titanium was removed by washing until this absorption was not observed.

The solid titanium catalyst component prepared as described above was preserved as a decane slurry, and a part of the slurry was dried to check the catalyst composition. The composition of the solid titanium catalyst component thus obtained had 2.3% by mass of titanium, 61% by mass of chlorine, 19% by mass of magnesium, and 12.5% by mass of DIBP.

(2) Preparation of prepolymerization catalyst

100 g of the solid titanium catalyst component, 131 mL of triethylaluminum, 37.3 ml of diethylamino triethoxysilane, and 14.3 L of heptane were inserted into an autoclave equipped with a stirrer with a capacity of 20 L, 1000 g of propylene was inserted thereto while holding the internal temperature at 15 to 20°C, and the mixture was allowed to react for 120 minutes while stirring. After polymerization was finished, the solid component was precipitated, and the removal of the supernatant and washing with heptane were carried out twice. The resulting prepolymerization catalyst was resuspended in the purified heptane, and the concentration of the mixture was regulated with heptane so that the solid catalyst component concentration was 1.0 g/L to obtain a prepolymerization catalyst slurry.

(3) Polymerization

A jacketed circulation type tubular polymerizer with a capacity of 58 L was continuously supplied with propylene at 43 kg/hour, hydrogen at 256 NL/hour, the prepolymerization catalyst slurry produced in (2) at 0.49 g/hour as the solid titanium catalyst component, triethylaluminum at 4.5 mL/hour, and diethylamino triethoxysilane at 1.8 mL/hour, and polymerization was performed in a full liquid state without a gas phase. The temperature of the tubular polymerizer was 70°C, and the pressure was 3.57 MPa/G.

The resulting slurry was fed to a polymerization vessel equipped with a stirrer with a capacity of 100 L, and polymerization was further carried out. The polymerizer was supplied with propylene at 45 kg/hour, and hydrogen so that the hydrogen concentration in the gas phase was 8.8 mol%, and polymerization was carried out at a polymerization temperature of 68°C and a pressure of 3.36 MPa/G.

Then, the resulting slurry was transferred to a liquid transfer pipe with a capacity of 2.4 L, the slurry was gasified, and gas-solid separation was carried out. Thereafter, polypropylene homopolymer powder was fed to a gas phase polymerizer with a capacity of 480 L, and ethylene/propylene block copolymerization was carried out. The gas phase polymerizer was continuously supplied with propylene, ethylene, and hydrogen so that the gas composition in the gas phase polymerizer was ethylene/(ethylene + propylene) = 0.20 (a molar ratio) and hydrogen/ethylene = 0.0031 (a molar ratio), and polymerization was carried out at a polymerization temperature of 70°C and a pressure of 1.40 MPa/G.

Then, the resulting propylene-based block copolymer was vacuum dried at 80°C. In the propylene/ethylene block copolymer (A-1) thus obtained, the MFR (230°C, 2.16 kg load) was 80 g/10 min, the amount of the decane-soluble portion (propylene/ethylene copolymer component) was 7% by mass, the amount of the decane-insoluble portion (propylene homopolymer component) was 93% by mass, and the intrinsic viscosity [η] of the decane-soluble portion was 7.5 dl/g.

[Production Example 2] Preparation of propylene homopolymer (B-1)

A solid titanium catalyst component was obtained in the same manner as (1) Preparation of solid titanium catalyst component of Production Example 1.

(2) Production of prepolymerization catalyst

100 g of the solid titanium catalyst component, 39.3 mL of triethylaluminum, and 100 L of heptane were inserted

into an autoclave equipped with a stirrer with a capacity of 200 L, 600 g of propylene was inserted thereto while holding the internal temperature at 15 to 20°C, and the mixture was allowed to react while stirring for 60 minutes to obtain a prepolymerization catalyst slurry.

(3) Polymerization

A jacketed circulation type tubular polymerizer with a capacity of 58 L was continuously supplied with propylene at 43 kg/hour, hydrogen at 177 NL/hour, the prepolymerization catalyst slurry produced in (2) at 0.58 g/hour as the solid titanium catalyst component, triethylaluminum at 3.1 mL/hour, and dicyclopentyldimethoxysilane at 3.3 mL/hour, and polymerization was performed in a full liquid state without a gas phase. The temperature of the tubular polymerizer was 70°C, and the pressure was 3.53 MPa/G.

The resulting slurry was fed to a polymerization vessel equipped with a stirrer with a capacity of 100 L, and polymerization was further carried out. The polymerizer was supplied with propylene at 45 kg/hour, and hydrogen so that the hydrogen concentration in the gas phase was 3.2 mol%, and polymerization was carried out at a polymerization temperature of 70°C and a pressure of 3.28 MPa/G.

Then, the resulting propylene homopolymer was vacuum dried at 80°C. The MFR (230°C, 2.16 kg load) of the propylene homopolymer (B-1) thus obtained was 30 g/10 min.

[Production Example 3] Preparation of propylene homopolymer (B-2)

First, a prepolymerization catalyst slurry was obtained in the same manner as (1) Preparation of solid titanium catalyst component and (2) Production of prepolymerization catalyst of Production Example 1.

(3) Polymerization

A polymerization vessel equipped with a stirrer with a capacity of 1000 L was continuously supplied with propylene at 131 kg/hour, the prepolymerization catalyst slurry at 0.70 g/hour as the transition metal catalyst component, triethylaluminum at 19.6 mL/hour, and diethylamino triethoxysilane at 4.2 mL/hour, and supplied with hydrogen so that the hydrogen concentration in the gas phase was 5.3 mol%, and polymerization was carried out at a polymerization temperature of 75°C and a pressure of 3.5 MPa/G.

The resulting slurry was fed to a polymerization vessel equipped with a stirrer with a capacity of 500 L, and polymerization was further carried out. The polymerizer was supplied with propylene at 30 kg/hour, and hydrogen so that the hydrogen concentration in the gas phase was 3.9 mol%, and polymerization was carried out at a polymerization temperature of 74.5°C and a pressure of 3.4 MPa/G.

Then, the resulting slurry was fed to a polymerization vessel equipped with a stirrer with a capacity of 500 L, and polymerization was further carried out. The polymerizer was supplied with propylene at 20 kg/hour, and hydrogen so that the hydrogen concentration in the gas phase was 3.4 mol%, and polymerization was carried out at a polymerization temperature of 73°C and a pressure of 3.4 MPa/G.

Then, the resulting slurry was deactivated and vaporized, and then, gas-solid separation was carried out. The resulting propylene homopolymer was vacuum dried at 80°C. The MFR (230°C, 2.16 kg load) of the propylene homopolymer (B-2) thus obtained was 210 g/10 min.

[Ethylene/$\alpha$-olefin copolymer]

As the ethylene/$\alpha$-olefin copolymer(C-1), TAFMER(R) A4050S (ethylene content = 80 mol%, 1-butene content = 20 mol%, MFR (230°C, 2.16 kg load) = 7 g/10 min, density = 0.862 g/cm$^3$, and melting point peak = less than 50°C) manufactured by Mitsui Chemicals, Inc. was used.

As the ethylene/$\alpha$-olefin copolymer(C-2), TAFMER(R) A1050S (ethylene content = 80 mol%, 1-butene content = 20 mol%, MFR (230°C, 2.16 kg load) = 2 g/10 min, density = 0.862 g/cm$^3$, and melting point peak = less than 50°C) manufactured by Mitsui Chemicals, Inc. was used.

As the ethylene/$\alpha$-olefin copolymer (C-3), ENGAGE(R) 11547 (MFR (230°C, 2.16 kg load) = 9 g/10 min, density = 0.866 g/cm$^3$, melting point peak = 120°C) which is a polyolefin elastomer manufactured by The Dow Chemical Company. was used.

[Inorganic filler]

As the inorganic filler (D-1), talc having the following characteristics was used.
(D-1): talc, average particle size (laser diffraction method) = 6.0 pm, aspect ratio (measured by SEM) = 7.0

[Examples 1 to 2, Comparative Examples 1 to 2]

The propylene-based polymer (A), the propylene homopolymer (B), the ethylene/α-olefin copolymer (C), and the inorganic filler (D) were mixed in the amounts shown in Table 1 and extruded by a biaxial extruder (TEX(R) 30α manufactured by The Japan Steel Works, LTD.) under conditions of a cylinder temperature of 180°C, a screw rotation of 750 rpm, and an amount of extrusion of 60 kg/h to obtain a polypropylene-based resin composition. Each melt flow rate (230°C, 2.16 kg load) of each of the resulting polypropylene-based resin compositions is shown in Table 1.

Each of the resulting polypropylene-based resin compositions was subjected to injection molding using a mold cavity having a length of 350 mm, a width of 100 mm, and a thickness of 3 mm at a resin temperature of 210°C and a mold temperature of 40°C to obtain flat plates, and these were cut out into a shape of 100 mm × 50 mm × 3 mm to obtain molded body test pieces for the primerless adhesion test. Also, molded body test pieces for measurement having the above-described shape were obtained by injection molding/cutting at the same resin temperature and the same molding temperature.

Using each of the resulting molded body test pieces, the flexural modulus, the Izod impact strength, and the coefficient of linear expansion were measured by the above-described testing methods. In addition, the hot shear test strength at 90°C was measured by the above-described primerless adhesion test. The results are shown in Table 1.

[Table 1]

Table 1

| | | | MFR (g/10 min) | Melting point peak (°C) | (Unit) | Example 1 | Example 2 | Comparative Example 1 | Comparative Example 2 |
|---|---|---|---|---|---|---|---|---|---|
| Blending composition of polypropylene-based resin composition | Component (A) | A-1 | 80 | | parts by mass | 13 | 13 | 13 | 13 |
| | Component (B) | B-1 | 30 | | parts by mass | 10 | 20 | 10 | 10 |
| | | B-2 | 200 | | parts by mass | 16.5 | 6.5 | 16.5 | 16.5 |
| | Component (C) | C-1 | 7 | <50°C | parts by mass | | | 25.5 | |
| | | C-2 | 2 | <50°C | parts by mass | | | | 25.5 |
| | | C-3 | 9 | 120°C | parts by mass | 25.5 | 25.5 | | |
| | Component (D) | D-1 | - | | parts by mass | 35 | 35 | 35 | 35 |
| Physical properties of composition | MFR (230°C, 2.16 kg) | | | | g/10 min | 38 | 28 | 31 | 22 |
| Physical properties of molded body | Flexural modulus | | | | MPa | 2637 | 2508 | 2644 | 2644 |
| | Izod impact strength at -30°C | | | | J/m | 44 | 46 | 43 | 54 |
| | Coefficient of linear expansion (-30°C to 80°C) MD and TD average value | | | | $\times 10^{-5}$/°C | 3.5 | 3.8 | 3.5 | 3.9 |

(continued)

| | | | MFR (g/10 min) | Melting point peak (°C) | (Unit) | Example 1 | Example 2 | Comparative Example 1 | Comparative Example 2 |
|---|---|---|---|---|---|---|---|---|---|
| Primerless adhesion test | Hot shear strength at 90°C (average n=4) | Surface treated state Low treatment | | Dyne: 42 | MPa | 1.64 | 2.30 | 1.66 | 1.48 |
| | | Surface treated state Middle treatment | | Dyne: 52 | MPa | 2.17 | 2.12 | 1.41 | 1.28 |
| | | Surface treated state High treatment | | Dyne: 64 | MPa | 1.99 | 2.17 | 1.53 | 1.48 |

As is apparent from the results shown in Table 1, it was found that the molded body composed of a polypropylene-based resin composition containing an ethylene/α-olefin copolymer having such a high melting point that the melting point peak is 110°C or more has excellent mechanical properties, is firmly adhered to a cured layer made of an adhesive in a primerless adhesion test, and has a high adhesion strength under high temperature conditions at 90°C.

Industrial Applicability

The polypropylene-based resin composition of the present invention and the molded body thereof can suitably be utilized for applications as an automobile interior material such as a door trim, an instrument panel, a ceiling, a console box, a pillar, and a glove box; an automobile exterior member such as a bumper, a side guard, an air spoiler, a side protector, a fender, a door panel, and a back door; a home appliance component; or an industrial component such as a building material.

## Claims

**1.** A polypropylene-based resin composition comprising:

5 to 47 parts by mass of a propylene-based polymer (A) having a melt flow rate (230°C, 2.16 kg load) of 50 to 150 g/10 min and an amount of a decane-soluble portion of 6 to 15% by mass,
20 to 30 parts by mass of a propylene homopolymer (B) having a melt flow rate (230°C, 2.16 kg load) of 10 to 500 g/10 min,
23 to 30 parts by mass of an ethylene/α-olefin copolymer (C) being a random copolymer of ethylene and an α-olefin having 4 to 8 carbon atoms, and having a density of 0.850 to 0.880 g/cm3, a melt flow rate (230°C, 2.16 kg load) of 0.5 to 30 g/10 min, and a melting point peak of 110°C or more, and
30 to 40 parts by mass of an inorganic filler (D), provided that a total amount of the components (A) to (D) is 100 parts by mass.

**2.** The polypropylene-based resin composition according to claim 1, wherein the propylene-based polymer (A) is a block copolymer of propylene and ethylene, and an intrinsic viscosity [η] of a decane-soluble portion of the copolymer is 2 to 9 dl/g.

**3.** The polypropylene-based resin composition according to claim 1, wherein the inorganic filler (D) is talc and has an aspect ratio of 3 or more and less than 15.

**4.** The polypropylene-based resin composition according to claim 1, wherein the polypropylene-based resin composition has a hot shear test strength at 90°C of more than 1.5 MPa in a primerless adhesion test.

**5.** The polypropylene-based resin composition according to claim 1, wherein the composition is used for an automobile exterior member.

**6.** A molded body comprising the polypropylene-based resin composition according to any one of claims 1 to 5.

**7.** The molded body according to claim 6, wherein the molded body is an injection molded body or a press molded body.

**8.** The molded body according to claim 6, wherein the molded body is an automobile exterior member.

[Fig. 1]

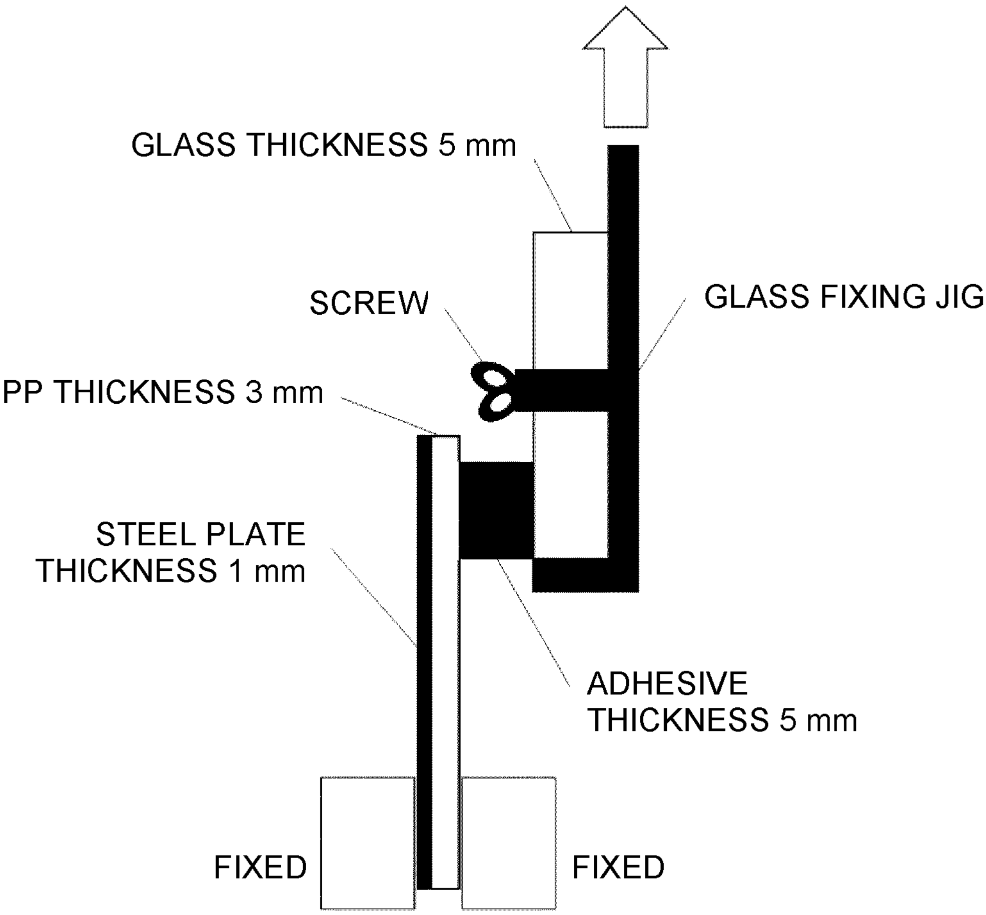
GLASS THICKNESS 5 mm
GLASS FIXING JIG
SCREW
PP THICKNESS 3 mm
STEEL PLATE
THICKNESS 1 mm
ADHESIVE
THICKNESS 5 mm
FIXED
FIXED

## INTERNATIONAL SEARCH REPORT

International application No.
**PCT/JP2022/045493**

**A. CLASSIFICATION OF SUBJECT MATTER**

***C08L 23/14***(2006.01)i; ***C08F 297/00***(2006.01)i; ***C08K 3/013***(2018.01)i; ***C08K 3/34***(2006.01)i; ***C08L 23/08***(2006.01)i; ***C08L 23/12***(2006.01)i; ***C08L 53/00***(2006.01)i
FI: C08L23/14; C08F297/00; C08K3/013; C08K3/34; C08L23/08; C08L23/12; C08L53/00

According to International Patent Classification (IPC) or to both national classification and IPC

**B. FIELDS SEARCHED**

Minimum documentation searched (classification system followed by classification symbols)

C08L23/14; C08F297/00; C08K3/013; C08K3/34; C08L23/08; C08L23/12; C08L53/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-158554 A (PRIME POLYMER CO., LTD.) 01 October 2020 (2020-10-01) entire text, all drawings (in particular, claims, examples 1-4) | 1-8 |
| A | JP 2017-88742 A (PRIME POLYMER CO., LTD.) 25 May 2017 (2017-05-25) entire text (in particular, claims, examples 1-4) | 1-8 |
| A | JP 2016-84386 A (PRIME POLYMER CO., LTD.) 19 May 2016 (2016-05-19) entire text (in particular, claims, examples 1, 2) | 1-8 |
| A | WO 2019/208601 A1 (PRIME POLYMER CO., LTD.) 31 October 2019 (2019-10-31) entire text (in particular, claims, examples A1-A3, paragraph [0079]) | 1-8 |
| A | JP 9-176406 A (MITSUI PETROCHEM IND LTD.) 08 July 1997 (1997-07-08) entire text (in particular, claims, examples 1, 2) | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 February 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/045493**

| Patent document cited in search report | Publication date (day/month/year) | Patent family member(s) | Publication date (day/month/year) |
|---|---|---|---|
| JP 2020-158554 A | 01 October 2020 | (Family: none) | |
| JP 2017-88742 A | 25 May 2017 | US 2018/0327580 A1<br>entire text (in particular, claims, examples 1-4)<br>CN 108699303 A | |
| JP 2016-84386 A | 19 May 2016 | (Family: none) | |
| WO 2019/208601 A1 | 31 October 2019 | US 2021/0246289 A1<br>entire text (in particular, claims, examples A1-A3, paragraph [0130])<br>EP 3786229 A1<br>CN 112119122 A | |
| JP 9-176406 A | 08 July 1997 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010077396 A
- JP H51993051498 A
- JP 2000095919 A
- JP 2007091789 A
- JP 2013159709 A
- JP 2014058614 A
- JP 2016084386 A
- WO 2017082358 A
- JP S57198263310 A
- JP H51993170843 A
- JP 2001354714 A
- EP 585869 A1
- WO 2004016662 A